# EUROPEAN PATENT APPLICATION

(11) **EP 4 797 189 A1**
(43) Date of publication of application: **26.08.2026**
(21) Application number: 24879948.8
(22) Date of filing: 03.09.2024
(51) Int. Cl.: G06Q 50/00, G06Q 50/10, H04W 4/021, A63F 13/69

(54) **SYSTEM FOR PROVIDING REFERENCE AREA-BASED USER PLAY USING LOCAL DEVICE**

(30) Priority: 16.10.2023 KR 20230137420
(71) Applicant: Altsoft, Inc., Seoul 06097 (KR)
(72) Inventor: KIM, Chan Hong, Seoul 06097 (KR)
(74) Representative: M. Zardi & Co S.A.
(86) International application number: PCT/KR2024/013197
(87) International publication number: WO 2025/084609

(57) **Abstract**

According to a system for providing reference area-based user play using a local device, which is proposed in the present invention: user play, in which the entire play is completed by a combination of a first play outside a reference area of a local device and a second play inside the reference area, is supported so that enjoyment can be provided via various plays inside and outside the reference area; a play outside the reference area is essentially included, and the first play is thus performed before or after visiting the reference area, so that interest in an offline place corresponding to the reference area can be increased; and since a play inside the reference area is also essentially included, users are allowed to visit the reference area, so that offline meetings and communication can be promoted, and a contribution can be made to invigoration of a region, a tourist destination, or the like to which the reference area belongs.

## Description

### Technical Field

The present disclosure relates to a system for providing user-engaged play and, more particularly, to a system for providing reference area-based user-engaged play using a local device.

### Background Art

The content described in this section simply provides background information on one exemplary embodiment of the present disclosure, and does not constitute the related art.

The importance of social media for communicating with others on the Web is increasingly growing. However, since social media is limited to online, people are neglecting offline communication or engage in offline conversations with difficulty. In offline gatherings, people often become engrossed in their phones, and within many online relationships, individuals can actually feel isolated. Accordingly, there is a need to develop technology capable of organically and systematically connecting online and offline spaces to facilitate offline gatherings and communication.

Meanwhile, recent offline activities such as shopping, tourism, and sightseeing are organically combined with online activities enabling people to authenticate or share their offline activities through online social network services (SNS), receive various kinds of information about offline destinations in real time online, and make reservations in real time through online channels right away when reservations are needed. In order to more organically connect and activate these online and offline activities and provide users with more diverse and fun experiences, technological development for various connection methods and services is required.

The above-described background art is technical information that the present inventor possessed for derivation of the present disclosure or obtained in a derivation process of the present disclosure, and is not necessarily known technology disclosed to the general public prior to filing the exemplary embodiment of the present disclosure.

### Disclosure

### Technical Problem

The present disclosure is proposed to solve the problems of the existing proposed methods, and an objective of the present disclosure is to provide a system for providing reference area-based user-engaged play using a local device, the system supporting the user-engaged play where the combination of first content play outside a reference area of the local device and second content play within the reference area completes the overall play experience, so as to provide fun through various kinds of content play within and outside the reference area, increase interest in an offline place corresponding to the reference area due to allowing the first content play, including prerequisite content play outside the reference area, to be played before or after visiting the reference area, and guide users to visit the reference area due to also including prerequisite content play provided within the reference area, thereby promoting offline gatherings and communications and contribute to the activation of an area or a tourist destination to which the reference area belongs.

However, the technical problems to be solved by the present disclosure is not limited to the technical problems as described above, and other technical problems may exist. Even though not explicitly mentioned, the present disclosure naturally includes other objectives or effects, which may be identifiable from the problem solutions or embodiments.

### Technical Solution

According to the features of the present invention for achieving the above-described objective,
there is provided a system for providing reference area-based user-engaged play using a local device, the system including:
the local device installed in a specific location and having a set reference area;
a service server configured to support the user-engaged play where a combination of first content play outside the reference area and second content play within the reference area completes the overall play experience; and
a user terminal used by a user for at least one kind of the first content play and the second content play.

Preferably,
the user-engaged play may be performed with content composed of a plurality of missions.

More preferably, the missions may be configured to include:
at least one first mission that the user has to play outside each reference area; and
at least one second mission that the user has to play within each reference area.

Furthermore preferably, the service server may include:
a storage unit configured to store information on the set reference areas of the local device;
a location determination unit configured to use location information of the user terminal, so as to determine whether a location of the user terminal is outside or inside the reference areas of the local device;
a first content play processing unit configured to provide the first mission to the user terminal located outside each reference area, and receive and process information on the first content play that is user performance information for the first mission;
a second content play processing unit configured to provide the second mission to at least one of the user terminal and the local device, both of which are located within each reference area, and receive and process information on the second content play that is user performance information for the second mission; and
a content play management unit configured to integrate processing results of the first content play processing unit and the second content play processing unit, so as to manage the overall play experience of each kind of content.

Even more preferably, the service server may further include
an information provision unit configured to provide information on each kind of content, the information comprising information on the missions constituting each kind of content and information on the areas where the respective missions have to be played, to the user terminal.

Still more preferably, the service server may further include
a reward provision unit configured to provide rewards to the user according to results of the overall play experience of each kind of content, the overall play experience being managed by the content play management unit.

Preferably, for the local device,
each reference area may be an area including the location of the local device or an area adjacent to the location of the local device.

### Advantageous Effects

According to the system for providing the reference area-based user-engaged play using the local device, the system being proposed in the present disclosure, there are effects of supporting the user-engaged play where the combination of first content play outside a reference area of the local device and second content play within the reference area completes the overall play experience, so as to provide fun through various kinds of content play within and outside the reference area, increase interest in an offline place corresponding to the reference area due to allowing the first content play, including prerequisite content play outside the reference area, to be played before or after visiting the reference area, and guide users to visit the reference area due to also including prerequisite content play provided within the reference area, thereby enabling to promote offline gatherings and communications and contribute to the activation of an area or a tourist destination to which the reference area belongs.

In addition, the various and advantageous strong points and effects of the present disclosure are not limited to the above-described content, and will be more easily understood in the process of describing the specific embodiment of the present disclosure.

### Description of Drawings

FIG. 1 is a view illustrating a configuration of a system for providing reference area-based user-engaged play using a local device according to one exemplary embodiment of the present disclosure.
FIG. 2 is a view illustrating content and user-engaged play in the system for providing the reference area-based user-engaged play using the local device according to one exemplary embodiment of the present disclosure.
FIG. 3 is a view illustrating content play according to a user's location in the system for providing the reference area-based user-engaged play using the local device according to one exemplary embodiment of the present disclosure.
FIG. 4 is a view illustrating a detailed configuration of a service server in the system for providing the reference area-based user-engaged play using the local device according to one exemplary embodiment of the present disclosure.
FIG. 5 is a view illustrating a user terminal displaying a mission list provided at location X1 in the system for providing the reference area-based user-engaged play using the local device according to one exemplary embodiment of the present disclosure.
FIG. 6 is a view illustrating the user terminal displaying a mission list provided at location X2 in the system for providing the reference area-based user-engaged play using the local device according to one exemplary embodiment of the present disclosure.
FIG. 7 is a view illustrating the user terminal on which the content play results of missions are displayed in the system for providing the reference area-based user-engaged play using the local device according to one exemplary embodiment of the present disclosure.

### <Description of the Reference Numerals in the Drawings>

1: reference area
10: content
10a,10b, 10c, 10d: mission
11: first mission
12: second mission
20: user-engaged play
20a, 20b, 20c, 20d: content play
21: first content play
22: second content play
100: service server
110: storage unit
120: location determination unit
130: first content play processing unit
140: second content play processing unit
150: content play management unit
160: information provision unit
170: reward provision unit
200: local device
300: user terminal

### Best Mode

Hereinafter, one exemplary embodiment of the present disclosure will be described in detail with reference to the accompanying drawings so that those skilled in the art may easily implement the present disclosure. However, the present disclosure is not limited to the exemplary embodiments described herein and may be embodied in many different forms. In addition, in order to clearly describe the present disclosure in the drawings, parts irrelevant to the description are omitted, and like reference numerals designate like elements throughout the specification.

Throughout the present specification, when a part is said to be "connected" to another part, an expression such as "connected" is intended to include not only "directly connected" but also "indirectly connected", while having a different element in the middle thereof. In addition, it will be further understood that, when a part is said to "include" or "comprise" a certain component, it means that it may further include or comprise other components, but does not exclude other components unless the context clearly indicates otherwise, and does not preclude the presence or addition of one or more other features, integers, steps, operations, elements, components, and/or combinations thereof.

The following exemplary embodiment is a detailed description for better understanding of the exemplary embodiment of the present disclosure, and do not limit the scope of the present disclosure. Therefore, embodiments of the same scope that perform the same functions as those of the present disclosure will also fall within the scope of the present disclosure.

In addition, each component, process, progress, method, or the like included in each exemplary embodiment of the present disclosure may be shared within a range that does not contradict each other technically.

In addition, in the present disclosure, some of the operations or functions described as being performed by a terminal, apparatus, or device may be performed instead by a server connected to the corresponding terminal, apparatus, or device. Likewise, some of the operations or functions described as being performed by the server may also be performed by the terminal, apparatus, or device connected to the corresponding server.

In particular, as a means for executing a system according to each exemplary embodiment of the present disclosure, there may be provided an application or a web server. In addition as a means for reading a recording medium on which the application or web server is recorded, this means may include not only a general PC such as a general desktop or laptop computer, but also a mobile terminal such as a smartphone and a tablet PC.

Hereinafter, exemplary embodiments of the present disclosure will be described in detail with reference to the accompanying drawings.

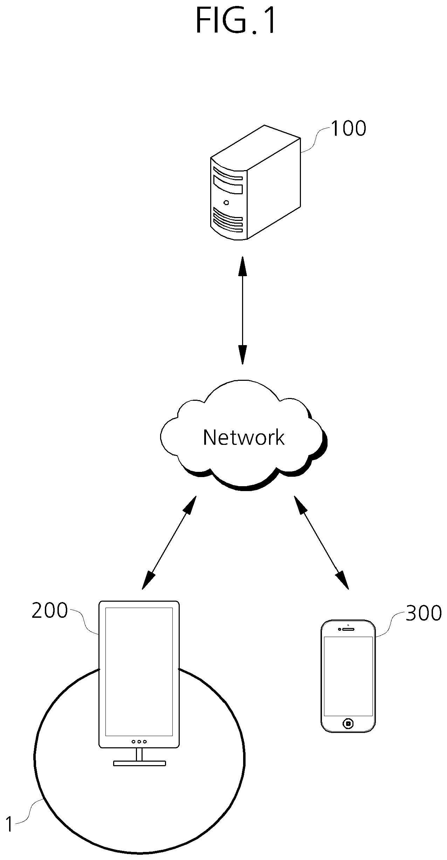

FIG. 1 is a view illustrating a configuration of a system for providing reference area 1-based user-engaged play by using a local device 200 according to one exemplary embodiment of the present disclosure. As illustrated in FIG. 1, according to one exemplary embodiment of the present disclosure, the system for providing the reference area-based user-engaged play using the local device 200 includes: the local device 200 installed in a specific location and having a set reference area 1; a service server 100 configured to support the user-engaged play where a combination of first content play outside the reference area 1 and second content play within the reference area 1 completes the overall play experience; and a user terminal 300 used by a user for at least one kind of the first content play and the second content play.

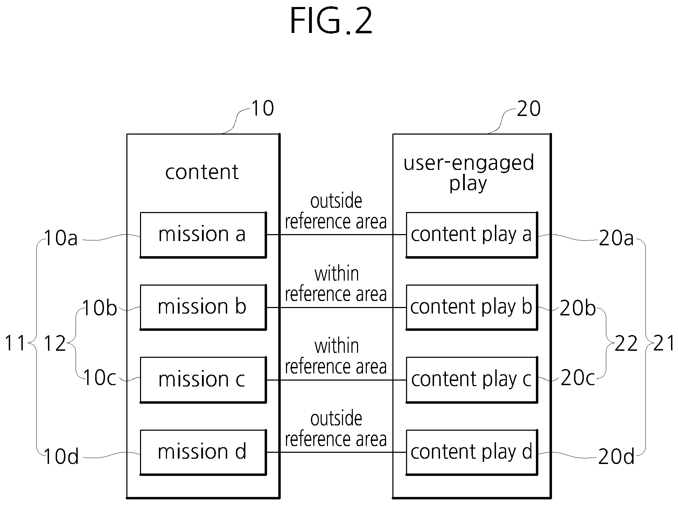

FIG. 2 is a view illustrating content 10 and user-engaged play 20 in the system for providing the reference area 1-based user-engaged play 20 using the local device 200 according to one exemplary embodiment of the present disclosure. As illustrated in FIG. 2, in the system for providing reference area 1-based user-engaged play 20 using the local device 200 according to one exemplary embodiment of the present disclosure, the content 10 is composed of a plurality of missions, and the kinds of user-engaged play of a user performing the respective missions are combined together, whereby the overall play experience for the content 10, i.e., the user-engaged play 20, may be completed. Here, the user-engaged play 20 may refer to an activity performing the content 10 composed of the plurality of missions. In addition, the content 10 may be at least one selected from a group including games, surveys, play, quizzes and learning, and one piece of content 10 may be composed of various types of missions.

Meanwhile, the missions constituting the content 10 may be configured to include: at least one first mission 11 that the user has to play outside a reference area 1; and at least one second mission 12 that the user has to play within the reference area 1. For example, as illustrated in FIG. 2, the content 10 may be composed of mission a 10a, mission b 10b, mission c 10c, and mission d 10d. Among these missions, mission a 10a and mission d 10d, which have to be played outside the reference area 1, may be the first mission 11, and mission b 10b and mission c 10c, which have be played within the reference area 1, may be the second mission 12.

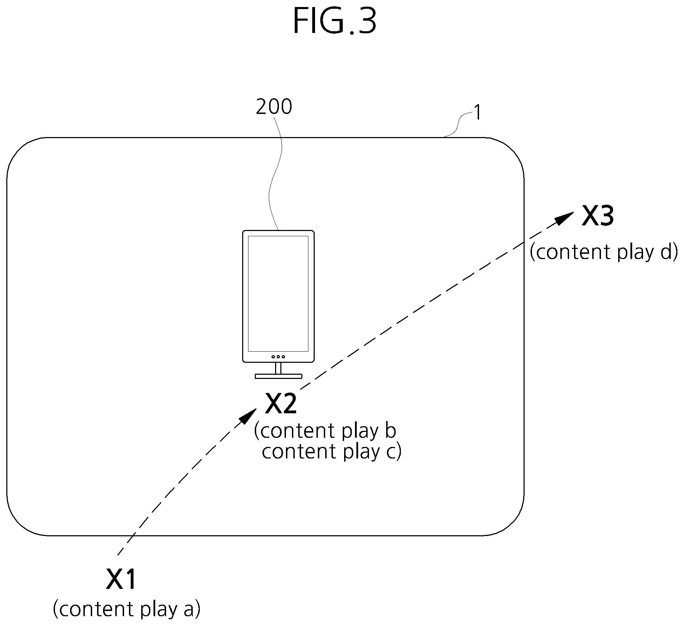

In addition, the content play means an activity of performing a mission, and the content play performed outside the reference area 1 may be the first content play 21, and the content play performed within the reference area 1 may be the second content play 22. In the examples in FIGS. 2 and 3, content play a 20a and content play d 20d, respectively performing the mission a 10a and mission d 10d as part of the first mission 11, may be the first content play 21 (performed outside the reference area 1), and content play b 20b and content play c 20c, respectively performing the mission b 10b and mission c 10c as part of the second mission 12, may be the second content play 22 (performed within the reference area 1). The first content play 21 or the second content play 22 may be processed at the boundary of the reference area 1, but the processing methods may be different from each other depending on the settings of content 10, the settings of reference area 1, etc.

In addition, depending on the types, settings, and others of content 10 or missions, user-engaged play may be performed through at least one operation from among the operation of a local device 200, the operation of a user terminal 300, and the operation of the local device 200 using the user terminal 300. In this case, the first content play 21 is performed outside the reference area 1, so it may be performed by the operation of the user terminal 300 or by the operation of the local device 200 using the user terminal 300. The second content play 22 may be performed by any one of the three types of operation further including the direct operation of the local device 200.

FIG. 3 is a view illustrating content play according to a user's location in the system for providing the reference area 1-based user-engaged play 20 using the local device 200 according to one exemplary embodiment of the present disclosure. Here, X1, X2, and X3 may represent the locations of the user or the locations of the user terminal 300. As illustrated in FIGS. 2 and 3, when the user is at location X1, he or she is at a location outside the reference area 1, so he or she may perform the mission a 10a as part of the first mission 11 through the content play a 20a. When the user moves into the reference area 1 and is at location X2, the user may perform the mission b 10b and mission c 10c as part of the second mission 12 through the content play b 20b and content play c 20c. Once more, after the user moves to location X3 outside the reference area 1, the user may perform the mission d 10d, which has not yet been played in the first mission 11, through the content play d 20d.

For example, a local device 200 may be installed in Suwon Hwaseong Fortress, and at least a portion of the Suwon Hwaseong tourist site may be set as a reference area 1 of the local device 200. Based on the established reference area 1, content 10 for tourism of Suwon Hwaseong Fortress may be provided to a user, and a learning mission providing fundamental information about Suwon Hwaseong Fortress and a quiz mission about Suwon Hwaseong Fortress may be provided as a first mission 11 that has to be performed outside the reference area 1. Through such a first mission 11, the user may obtain the fundamental information about the destination before visiting Suwon Hwaseong Fortress, thereby ensuring a fulfilling tour. In addition, as a second mission 12 that has to be performed within the reference area 1, activities performable within Suwon Hwaseong Fortress, such as a certification mission, an augmented-reality image confirmation mission, and a treasure hunt mission, may be provided as missions. In addition, the user may be provided with additional missions, such as writing a visit review, as part of the first mission 11.

In this way, according to one exemplary embodiment of the present disclosure, in the system for providing the reference area 1-based user-engaged play 20 using the local device 200, at least one kind of first content play 21 and at least one kind of second content play 22 can be combined to perform the user-engaged play 20, and when at least one or more kinds of content play are included each of outside and inside the reference area 1, the number, order, and the like of the kinds of content play may vary. In addition, depending on the content 10, there may be restrictions on content play order by allowing the mission a 10a, mission b 10b, mission c 10c, and mission d 10d to be performed in order, but these missions may also be played regardless of the order.

Hereinafter, each component of the system for providing the reference area 1-based user-engaged play 20 using the local device 200 according to one exemplary embodiment of the present disclosure will be described in detail with reference to FIGS. 1 to 3.

The service server 100 may support the user-engaged play 20 where the combination of the first content play 21 outside the reference area 1 and the second content play 22 within the reference area 1 completes the overall play experience. Here, the user-engaged play 20 may refer to an activity performing the content 10 composed of the plurality of missions. In addition, the content 10 may be at least one kind of content 10 selected from a group including games, surveys, play, quizzes and learning, and one kind of content 10 may be composed of various types of missions.

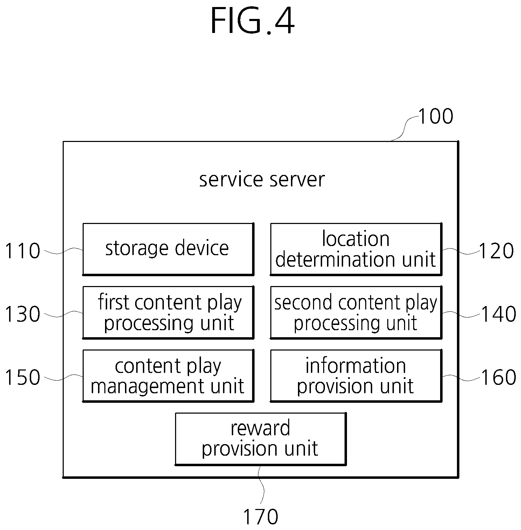

Through a network, the service server 100 may manage the plurality of local devices 200, and manage the reference area 1 and content 10 of each local device 200. The service server 100 may operate and manage the setting of a reference area 1 for each local device 200, the settings of content 10 and missions for each local device 200, the content play of the missions, the user-engaged play 20, etc. In this case, a plurality of kinds of content 10 is operated by the service server 100. The kinds of content 10 different from each other or the missions different from each other may be assigned to each local device 200. However, the same content 10 or the same mission may be assigned to the multiple local devices 200. The detailed configuration of the service server 100 will be described in detail later with reference to FIG. 4.

Local devices 200 may be installed in specific locations and reference areas 1 may be set. In addition, content 10 and missions may be assigned to each local device 200. A user may performs play missions of content 10 assigned to a specific local device 200 in both outside and inside a reference area 1 of the corresponding local device 200.

Meanwhile, the local device 200 may be at least one selected from a group including an IoT device, a signage device, and a display panel. More specifically, the IoT device may be an IoT bicycle for transmitting sensing information such as a wheel rotation count and a traveled distance to the service server 100, but is not limited thereto. As long as the IoT device, such as an LED or an IoT seesaw operating through an IoT sensor, is able to transmit the sensing information collected using an installed sensor to the service server 100 and is operated by a user terminal 300 within a reference area 1 so as to play content 10, this IoT device may serve as the local device 200 of the present disclosure regardless of its specific form or configuration.

In addition, the signage device is a video display device installed in public places, commercial spaces, or the like so as to provide various kinds of information and advertisements in real time. This signage device is able to output content 10 through its display and interact with a user, so as to enable the user to perform the play missions through the signage device, and therefore, this signage device may serve as the local device 200 of the present disclosure.

In addition, the display panel is a device for outputting information without user interaction, and may output information including: information on content 10 and missions; content play information on the content 10 and missions, which are played on a user terminal 300; and information on content play results, etc. In particular, the display panel has an advantage of having a cheaper installation cost than the signage device, ensuring easy maintenance, and an advantage of allowing its screen to be easily seen from distance owing to a configurable simple structure thereof.

Meanwhile, with respect to a local device 200, a reference area 1 of the local device 200 may be an area including the location of the local device 200, or be an area adjacent to the location of the local device 200. That is, the reference area 1 does not necessarily include the local device 200, but may be set adjacent to a location close enough to the extent that a user within the reference area 1 can be said to have visited or accessed the local device 200. Here, the area adjacent to the location of the local device 200 may mean that the maximum distance between the location of the installed local device 200 and the corresponding area is less than or equal to a preset distance.

Such local devices 200 may be installed in tourist destinations such as Suwon Hwaseong Fortress, administrative districts such as Gangnam-gu in Seoul, commercial spaces such as COEX, amusement parks, museums, etc., and may each set a reference area 1 and proceed with content 10 for activities and the like within a tourist destination. According to one exemplary embodiment, the reference area 1 may be an area directly set by an operator of the content 10, an administrator of the local device 200, etc.

Meanwhile, one kind of content 10 and a reference area 1 may be set in a local device 200, but depending on exemplary embodiments, a plurality of kinds of content 10 and a plurality of reference areas 1 may each be set in one local device 200.

The user terminal 300 may be an electronic device used by the user for at least one kind of the first content play 21 and the second content play 22. Here, the electronic device may include at least one of the following devices: a smartphone, a tablet personal computer (PC), a mobile phone, a video phone, an e-book reader, a desktop PC, a laptop PC, a netbook computer, a workstation, a server, a personal digital assistant (PDA), a media box, a game console, an electronic dictionary, or a wearable device. The wearable device may include at least one of devices selected from the following types: an accessory (e.g., a watch, a ring, a bracelet, an ankle bracelet, a necklace, glasses, contact lenses, or a head-mounted device (HMD)); a textile- or garment-integrated device (e.g., an electronic garment); a body-worn device (e.g., a skin pad or a tattoo); and a bio-implantable circuit device. In various exemplary embodiments, the electronic devices are not limited to the devices described above, and may be a combination of two or more of the various devices described above.

The user may access the service server 100 via the web or app (application) through the user terminal 300 and check the followings: the list of ongoing content 10, the location and reference area 1 of a local device 200, the status of participation in My Content 10, the progress of My Content 10, the lists of the first mission 11 and the second mission 12, the missions playable at the current location, etc. In addition, when user authentication is required on the local device 200, the user terminal 300 may also be used for the user authentication.

FIG. 4 is a view illustrating a detailed configuration of the service server 100 in the system for providing the reference area 1-based user-engaged play 20 using the local device 200 according to one exemplary embodiment of the present disclosure. As illustrated in FIG. 4, the service server 100 of the system for providing the reference area 1-based user-engaged play 20 using the local device 200 according to one exemplary embodiment of the present disclosure may be configured to include: a storage unit 110, a location determination unit 120, a first content play processing unit 130, a second content play processing unit 140, and a content play management unit 150, and may be configured to further include an information provision unit 160 and a reward provision unit 170.

The storage unit 110 may store information regarding set reference areas 1 of a local device 200. The storage unit 110 may store and manage device information such as the installation locations of local devices 200, the setting information of a reference area 1 of each local device 200, device IDs, and status information, and may store and manage these kinds of information along with information on the content 10 and missions, which are assigned to each local device 200.

The location determination unit 120 may determine whether the location of a user terminal 300 is outside or inside a reference area 1 of a local device 200 by using the location information of the user terminal 300. The first content play processing unit 130 and second content play processing unit 140, which will be described in detail later, may activate a first mission 11 or a second mission 12 in the user terminal 300 so that the first mission 11 can be played in the user terminal 300 at a location corresponding outside the reference area 1 of the local device 200, and the second mission 12 may be played in the user terminal 300 at a location corresponding within the reference area 1 of the local device 200 according to the determination results of the location determination unit 120. A user may check an activated mission and then play it by using at least one of the local device 200 and the user terminal 300.

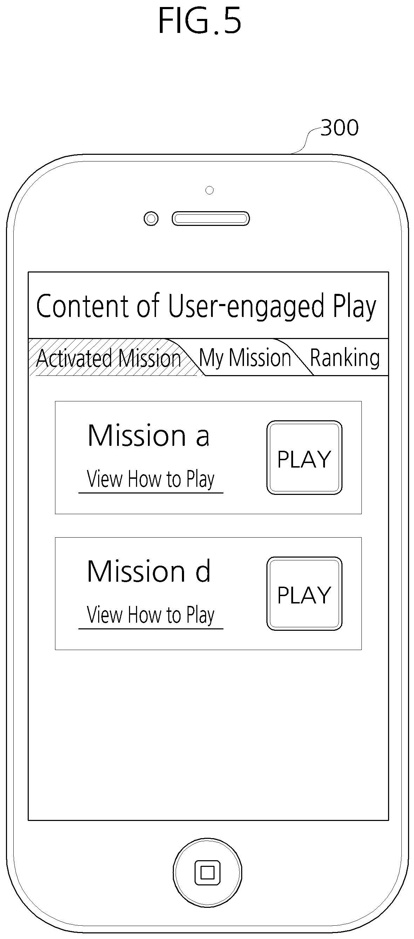

FIG. 5 is a view illustrating an example of the user terminal 300 in which a mission list provided at location X1 is displayed in the system for providing the reference area 1-based user-engaged play 20 using the local device 200 according to one exemplary embodiment of the present disclosure. That is, in the example as illustrated in FIG. 3, the location X1 of a user terminal 300 is outside a reference area 1, so the mission a 10a and mission d 10d of the first mission 11 are activated, and a list of "Activated games" may be checked on the user terminal 300 as illustrated in FIG. 5. On the screen as illustrated in FIG. 5, a user may select a menu "View How to Play" so as to check the description or content play method for each mission, and may play a corresponding mission right away by using a "PLAY" button. However, in a case where an execution order of the missions is set, only a mission currently performable may be activated on the user terminal 300.

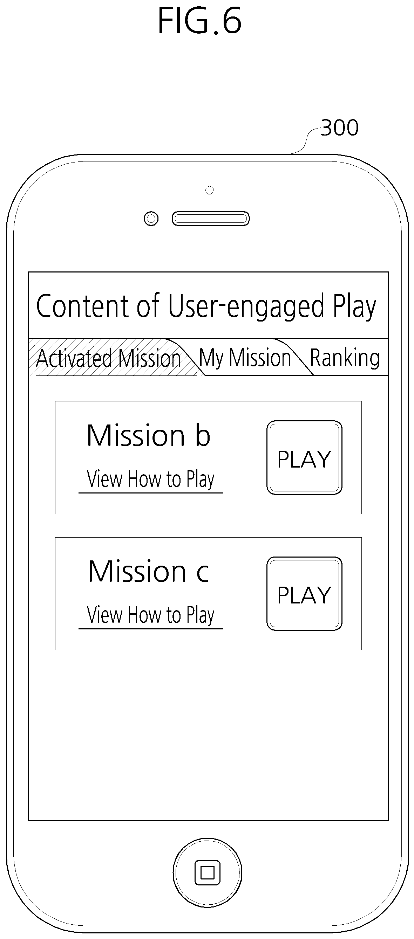

FIG. 6 is a view illustrating an example of the user terminal 300 in which a mission list provided at location X2 is displayed in the system for providing the reference area 1-based user-engaged play 20 using the local device 200 according to one exemplary embodiment of the present disclosure. That is, in the example as illustrated in FIG. 3, the location X2 of the user terminal 300 is inside the reference area 1, so the mission b 10b and mission c 10c of the second mission 12 are activated, and a list of "Activated games" may be checked on the user terminal 300 as illustrated in FIG. 6.

The first content play processing unit 130 may provide a first mission 11 to the user terminal 300 outside the reference area 1 and receive and process information on first content play 21, which is the user's performance information for the first mission 11. That is, in the screen as illustrated in FIG. 5, when the user selects a button "PLAY" and engages in the first content play 21, the information on the first content play 21 may be transmitted to the first content play processing unit 130.

Here, the first content play 21 is performed outside the reference area 1, so the user may perform it by operating the user terminal 300. In this case, the first content play processing unit 130 may receive the information on the first content play 21 from the user terminal 300 and reflect this information in the first mission 11. For example, a quiz mission about Suwon Hwaseong Fortress may be the first content play 21 in which the user solves the quiz about Suwon Hwaseong Fortress by using the user terminal 300, and the first content play processing unit 130 may receive information on the first content play 21 from the user terminal 300 and check and process a correct answer.

The second content play processing unit 140 may provide a second mission 12 to at least one of the user terminal 300 and the local device 200 within the reference area 1, and receive and process information on second content play 22, which is the user's performance information for the second mission 12. That is, in the screen as illustrated in FIG. 6, when the user selects a button "PLAY" and engages in the second content play 22, the information on the second content play 22 may be transmitted to the second content play processing unit 140.

Here, the second content play 22 is performed within the reference area 1, so in addition to operating the user terminal 300 to perform the play, the user may also perform the second content play 22 through interaction with the local device 200. The interaction with the local device 200 may include methods of directly operating the local device 200 by the user, operating the local device 200 with the user terminal 300, and the like.

For example, the user may play a mission, such as touching a signage screen or riding an IoT bicycle, by directly operating a local device 200 according to the form of each local device 200. In this case, the second content play processing unit 140 may receive and process the user's second content play 22 information having processed by the local device 200, and reflect it as mission completion, etc. In this case, the second content play 22 may vary depending on the types of content 10 or missions. For example, in a case of a mission that is a game for building a sand castle, an activity performed by the user manipulating a signage touch panel to build the sand castle can be the play, and in a case of a mission that is bicycle riding, a travel distance measured by a sensor may be transmitted to the service server 100 after the user finishes riding an IoT bicycle. According to one exemplary embodiment, the user may also perform the user-engaged play 20 by manipulating the user terminal 300, so as to control the local device 200. In this case, the service server 100 may receive and process information on the user-engaged play 20 from at least one of the local device 200 and the user terminal 300.

The content play management unit 150 may manage the overall play experience of the content 10 by integrating the processing results of the first content play processing unit 130 and the second content play processing unit 140. That is, the content play management unit 150 may complete the user-engaged play 20 of the entire content 10 through individual content play instances, and may integrally manage the user-engaged play 20 per content 10 and/or per user. In addition, the content play management unit 150 systematically and integrally manages various kinds of data related to the content 10 and user-engaged play 20, and may provide information that is under management upon user request in conjunction with the information provision unit 160 which will be described in detail below.

The information provision unit 160 may provide information on the content 10, including information on the missions constituting the content 10 and information on the areas where respective missions have to be played, to the user terminal 300. In this case, the information on the areas where respective missions have to be played may include: information on whether a content play area is inside or outside the reference area 1; information on an installation location of the local device 200 where the corresponding reference area 1 is set; and other information. In addition, the information provision unit 160 may provide information, such as the reference area 1 or the installation location of the local device 200, by displaying it on a map in conjunction with a mobile map.

In addition, the information provision unit 160 may share the content 10 and mission results, which are managed by the content play management unit 150, to the user terminal 300. More specifically, upon the user request, the information provision unit 160 may provide the information integrally managed by the content play management unit 150 by organizing the information with at least one of the following dimensions: per local device 200, per content 10, and/or per user. Depending on exemplary embodiments, the information provision unit 160 may also provide statistical information such as the number of users who played the content 10 or the number of participations, information on rankings, information on rewards paid through the content 10, etc.

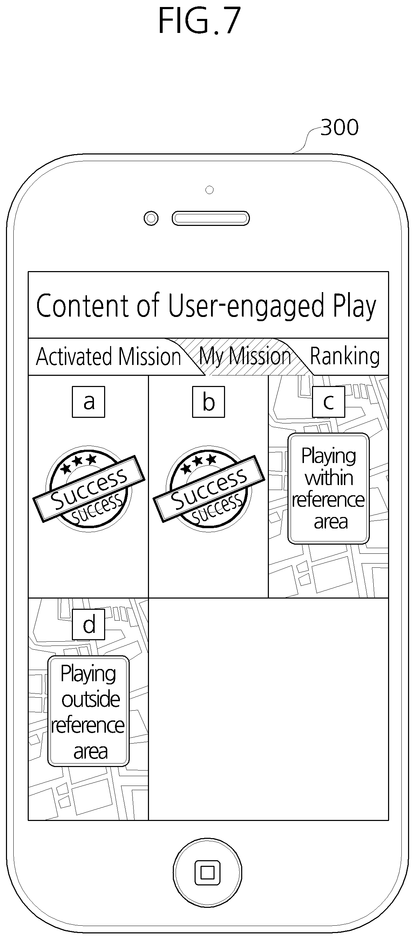

FIG. 7 is a view illustrating the user terminal 300 on which the content play results of missions are displayed in the system for providing the reference area 1-based user-engaged play 20 using the local device 200 according to one exemplary embodiment of the present disclosure. As illustrated in FIG. 7, in the system for providing the reference area 1-based user-engaged play 20 using the local device 200 according to one exemplary embodiment of the present disclosure, the information providing unit 160 may provide the user terminal 300 with the results of content 10 or missions according to the user's content play and the location of a local device 200, etc. That is, among the mission a, mission b, mission c, and mission d 10a, 10b, 10c, and 10d, which constitute the content 10, a badge or stamp indicating "Success" and the like may be displayed for the mission a 10a and mission b 10b in which the user performs the missions and their content play information is reflected, so that the users can check their results. For the mission c 10c and mission d 10d that have not yet been played, buttons linked to their maps may be provided so that the user can check a content play area on each map. When a corresponding button is selected, the area within the reference area 1 (in the case of mission c 10c) or the area outside the reference area 1 (in the case of mission d 10d) may be displayed on the map so as to be provided in conjunction with a mobile map.

The reward provision unit 170 may provide rewards to the user according to results of the overall play experience of the content 10, the results being managed by the content play management unit 150. The rewards to be offered may vary, including gift certificates, points, and prizes.

As described above, according to the system for providing the reference area 1-based user-engaged play 20 using the local device 200, the system being proposed in the present disclosure, the system supports the user-engaged play 20 where the combination of first content play 21 outside a reference area 1 of the local device 200 and second content play 22 within the reference area 1 completes the overall play experience, so as to provide fun through various kinds of content play within and outside the reference area 1, increase interest in an offline place corresponding to the reference area 1 due to allowing the first content play 21, including prerequisite content play outside the reference area 1, to be played before or after visiting the reference area 1, and guide users to visit the reference area 1 due to also including prerequisite content play provided within the reference area 1, thereby enabling to promote offline gatherings and communications and contribute to the activation of an area or a tourist destination to which the reference area 1 belongs.

The above description of the present disclosure is for illustration, and it will be understood that those skilled in the art to which the present disclosure pertains may easily transform the present disclosure in other specific forms without departing from the technical spirit or essential features thereof. Therefore, it should be understood that the above-described exemplary embodiments are illustrative in all respects and not restrictive. For example, each component described as a single type may be implemented in a distributed manner, and similarly, components described as distributed may be implemented in a combined form.

The scope of the present disclosure is indicated by the following claims rather than the above detailed description, and all changes or modifications derived from the meaning and scope of the claims and equivalent concepts should be interpreted as being included in the claims of the present disclosure.

## Claims

1. A system for providing reference area-based user-engaged play (20) using a local device (200), the system comprising:
the local device (200) installed in a specific location and having a set reference area (1);
a service server (100) configured to support the user-engaged play (20) where a combination of first content play (21) outside the reference area (1) and second content play (22) within the reference area (1) completes the overall play experience; and
a user terminal (300) used by a user for at least one kind of the first content play (21) and the second content play (22),
wherein a plurality of kinds of content (10) is managed by the service server (100), and
the plurality of kinds of content (10) and a plurality of reference areas (1) are each set in one local device (200).

2. The system of claim 1, wherein the user-engaged play (20) is performed with at least one of the plurality of kinds of content (10), and
each kind of content (10) is composed of a plurality of missions.

3. The system of claim 2, wherein the missions are configured to comprise:
at least one first mission (11) that the user has to play outside each reference area (1); and
at least one second mission (12) that the user has to play within each reference area (1).

4. The system of claim 3, wherein the service server (100) comprises:
a storage unit (110) configured to store information on the plurality of set reference areas (1) of the local device (200);
a location determination unit (120) configured to use location information of the user terminal (300), so as to determine whether a location of the user terminal (300) is outside or inside any one of the plurality of reference areas (1) of the local device (200);
a first content play processing unit (130) configured to provide the first mission (11) to the user terminal (300) located outside each reference area (1), and receive and process information on the first content play (21) that is user performance information for the first mission (11);
a second content play processing unit (140) configured to provide the second mission (12) to at least one of the user terminal (300) and the local device (200), both of which are located within each reference area (1), and receive and process information on the second content play (22) that is user performance information for the second mission (12); and
a content play management unit (150) configured to integrate processing results of the first content play processing unit (130) and the second content play processing unit (140), so as to manage the overall play experience of each kind of content (10) performed in the user-engaged play (20).

5. The system of claim 4, wherein the service server (100) further comprises:
an information provision unit (160) configured to provide information on each kind of content (10), the information comprising information on the missions constituting each kind of content (10) and information on the areas where the respective missions have to be played, to the user terminal (300).

6. The system of claim 4, wherein the service server (100) further comprises:
a reward provision unit (170) configured to provide rewards to the user according to results of the overall play experience of each kind of content (10), the overall play experience being managed by the content play management unit (150).

7. The system of claim 1, wherein each reference area (1) is an area comprising the location of the local device (200) or an area adjacent to the location of the local device (200).
